# EUROPEAN PATENT SPECIFICATION

(11) **EP 1 631 531 B1**
(45) Date of publication and mention of the grant of the patent: **29.12.2010**
(21) Application number: 04809399.1
(22) Date of filing: 17.05.2004
(51) Int. Cl.: C04B 2/00

(54) **A WEAR-RESISTANT MEMBER HAVING A HARD COMPOSITE COMPRISING HARD CONSTITUENTS HELD IN AN INFILTRANT MATRIX**
VERSCHLEISSFESTES ELEMENT MIT HARTEM VERBUNDWERKSTOFF MIT IN EINER INFILTRATIONSLEGIERUNG GEHALTENEN HARTEN BESTANDTEILEN
ELEMENT RESISTANT A L'USURE CONTENANT UN COMPOSITE DUR FORME DE CONSTITUANTS DURS DANS UNE MATRICE D'INFILTRATION

(30) Priority: 23.05.2003 US 444734; 04.06.2003 US 455492
(43) Date of publication of application: 08.03.2006
(60) Divisional application: 09012865.3
(73) Proprietor: KENNAMETAL INC., Latrobe, PA 15650-0231 (US)
(72) Inventor: MAJAGI, Shivanand, I., Rogers, AR 72758 (US)
(74) Representative: Prinz & Partner
(86) International application number: PCT/US2004/016042
(87) International publication number: WO 2005/030667

(56) References cited:
- US-A- 4 017 480
- US-A- 4 327 156
- US-A- 4 933 240
- US-B1- 6 227 188
- US-E1- R E37 127

## Description

The invention pertains to a wear-resistant member. In particular, the invention concerns a wear member that includes a hard composite member that is securely affixed to at least a portion of a support member. The hard composite comprises a plurality of hard components within a mold wherein an infiltrant alloy that has been infiltrated into the mass of the hard components.

In the past, the temperature at which the infiltrant alloy has been infiltrated into the mass of hard components has been high enough so that the infiltrant alloy had the potential to degrade the hard components upon contact therewith. Thus, there has been a desire to use an infiltrant alloy that has a melting point sufficiently low so as to minimize degradation of the hard components upon contact therewith.

There has also always remained the desire to render the manufacturing process for hard composite members less diffcult. It would thus be desirable to use an infiltrant alloy that would ease the manufacturing process for the hard composite.

One example of a hard composite wherein degradation of the hard component was a concern was shown in U.S. Patent No. 3,149,411 to Smiley et al. In the Smiley et al. patent there was an attempt to minimize the degradation of the cemented carbides by using an alloy that had a melting point between about 1750 degrees Fahrenheit (about 954 degrees Centigrade) and about 3000 degrees Fahrenheit (about 1649 degrees Centigrade). According to the Smiley et al. patent, the alloy also had to contain a metal from Group VIII, Series 4 of the Periodic Table (i.e., iron, cobalt or nickel) and minor amounts of chromium and boron. In the examples (see Cols. 7-8) of the Smiley et al. patent, the typical infiltration temperature ranged between about 2250 degrees Fahrenheit (1232 degrees Centigrade) and about 2600 degrees Fahrenheit (1427 degrees Centigrade).

Another example of a hard composite that had a matrix infiltrated between the interstices of a mass of the hard particles was shown in U.S. Patent No. 3,175,260 to Bridwell et al. In the Bridwell et al. patent, particles of cemented tungsten carbide or tungsten carbide alloy were heated and the molten matrix metal poured into the mold containing the hard particles. The Bridwell et al. patent mentioned that the melting point of the matrix metal ranged between about 1550 degrees Fahrenheit (843 degrees Centigrade) and 2400 degrees Fahrenheit (1316 degrees Centigrade). The infiltration temperature ranged between about 1750 degrees Fahrenheit (945 degrees Centigrade) and about 2500 degrees Fahrenheit (1371 degrees Centigrade).

U.S. Patent No. 5,589,268 to Kelley et al. (U.S. Patent No. 5,733,649 to Kelley et al. was a divisional thereof) pertained to a composite that comprised at least one discrete hard element held by a matrix powder wherein an infiltrant alloy had been infiltrated into the hard components. One suggested infiltrant alloy was a copper-nickel-zinc alloy identified as MACROFIL 65 wherein literature from Belmont Metals, Inc. showed that the melting point was 1100 degrees Centigrade. Another suggested infiltrant alloy was a copper-manganese-nickel-zinc-boron-silicon alloy identified as MACROFIL 53. According to the Kelley et al. patent, the MACROFIL 53 was usually infiltrated at about 2200 degrees Fahrenheit (1204 degrees Centigrade). U.S. Patent No. 5,733,664 to Kelley et al. was a continuation-in-part to the '268 Kelley et al. patent. The '664 Kelley et al. patent also disclosed the MACROFIL 53 alloy and the MACROFIL 65 alloy.

Since it is desirable to avoid the degradation of the hard components of a hard composite due to contact with the infiltrant alloy, it would be advantageous to provide a hard composite that utilizes a matrix material that does not degrade (or minimizes the degradation) of the hard components upon contact therewith during the infiltration process.

It is typical that for some applications, the hard composite attaches to a support member to form a wear member. The purpose of the hard composite is to provide wear resistance to the combination of the hard composite and the support member. The support member is intended to provide toughness to the wear member. In these cases, it would be advantageous for the infiltrant alloy and the support member to exhibit compatible properties so as to form a good bond between the hard composite and the support. In this application, it would also be advantageous to maintain the wear resistance properties, as well as the toughness properties, of the hard composite.

According to the present invention, a tough wear-resistant hard member is provided as defined in claim 1. The member comprises a support having a surface area and a hard composite member that is affixed to the support over at least a portion of the surface area of the support. The hard composite member comprises a plurality of discrete hard constituents distributed in the hard composite member wherein each one of the discrete hard constituents is of a size so as to have a surface area between 0.006 cm² and 103 cm² (0.001 square inches and 16 square inches). The discrete hard constituents comprise one or more of the compositions given in claim 1. The hard composite member further comprises a matrix powder comprising hard particles wherein substantially all of the hard particles of the matrix powder have a smaller size than the hard constituents. The hard composite member further comprises an infiltrant alloy having a melting point between about 500 degrees Centigrade and about 1400 degrees Centigrade wherein the infiltrant alloy is infiltrated under heat into a mixture of the discrete hard constituents and the matrix powder so as to not effectively degrade the hard constituents upon infiltration, whereby the hard constituents and the matrix powder and the infiltrant alloy are bonded together to form the hard composite member. The support is made of a material that is bondable with the infiltrant alloy whereby the infiltrant alloy forms a joint at the joinder of the support and the hard composite member. In a preferred embodiment the hard composite member comprises crushed nickel cemented chromium carbide particles having a particle size ranging between -325 mesh and +80 mesh, and the nickel content of the crushed nickel cemented chromium carbide particles ranges between 3 weight percent and 25 weight percent. The hard composite member further comprises an infiltrant alloy having a melting point between 500 degrees Centigrade and 1400 degrees Centigrade wherein the infiltrant alloy is infiltrated under heat into a mixture of the discrete hard constituents and the matrix powder so as to not effectively degrade the hard constituents upon infiltration, whereby the hard constituents and the matrix powder and the infiltrant_alloy are bonded together to form the hard composite member. The infiltrant alloy comprises between 60 weight percent and 80 weight percent of the hard composite, and the nickel cemented chromium carbide particles comprise between 20 weight percent and 40 weight percent of the hard composite. The support is made of a material that is bondable with the infiltrant alloy whereby the infiltrant alloy forms a joint at the interface of the support and the hard composite member.

In another embodiment, the hard composite member comprises cemented carbide compacts wherein the cemented carbide compacts cover between 40 percent and 85 percent of the surface area of the hard composite. The hard composite further comprises a matrix powder comprising hard particles. The hard composite member further comprises an infiltrant alloy having a melting point between 500 degrees Centigrade and 1400 degrees Centigrade, and the infiltrant alloy being infiltrated under heat into a mixture of the discrete hard constituents and the matrix powder so as to not effectively degrade the hard constituents upon infiltration, whereby the hard constituents and the matrix powder and the infiltrant alloy are bonded together to form the hard composite member. The support is made of a material that is bondable with the infiltrant alloy whereby the infiltrant alloy forms a joint at the interface of the support and the hard composite member.

In a further embodiment the hard composite member comprises a plurality of discrete hard constituents distributed in the hard composite member. The hard constituents comprise one or more of crushed nickel cemented chromium carbide particles having a particle size of-325 +80 mesh and titanium diboride particles having a particle size of-325 mesh. The hard composite member further comprises a matrix powder comprising between 65 weight percent and 69 weight percent crushed tungsten carbide particles of a particle size of -80 +325 mesh, between 12 weight percent and 17 weight percent crushed tungsten carbide particles having a particle size of -325 mesh, between 12 weight percent and 17 weight percent crushed cast tungsten carbide particles having a particle size of -325 mesh, and between 1.5 weight percent and 2.5 weight percent nickel particles having a particle size of -325 mesh. The hard composite member further comprises an infiltrant alloy having a melting point between 500 degrees Centigrade and 1400 degrees Centigrade. The infiltrant alloy is infiltrated under heat into a mixture of the discrete hard constituents and the matrix powder so as to not effectively degrade the hard constituents upon infiltration, whereby the hard constituents and the matrix powder and the infiltrant alloy are bonded together to form the hard composite member. The support is made of a material that is bondable with the infiltrant alloy whereby the infiltrant alloy forms a joint at the joinder of the support and the hard composite member.

In a still further embodiment the hard composite member comprises crushed nickel cemented chromium carbide particles having a particle size of -325 +80 mesh and titanium diboride particles having a particle size of-325 mesh. The crushed nickel cemented chromium carbide particles comprises between 45 weight percent and 70 weight percent of the combination of the crushed nickel cemented chromium carbide particles and the titanium diboride particles. The titanium diboride particles comprise between 30 weight percent and 55 weight percent of the combination of the crushed nickel cemented chromium carbide particles and the titanium diboride particles. The hard composite member further comprises an infiltrant alloy having a melting point between 500 degrees Centigrade and 1400 degrees Centigrade wherein the infiltrant alloy is infiltrated under heat into a mixture of the particles so as to not effectively degrade the particles upon infiltration, whereby the particles the infiltrant alloy are bonded together to form the hard composite member. The support is made of a material that is bondable with the infiltrant alloy whereby the infiltrant alloy forms a joint at the joinder of the support and the hard composite member.

### BRIEF DESCRIPTION OF THE DRAWINGS

The following is a brief description of the drawings that form a pert of this patent application wherein:
FIG. 1 is an isometric view of a tough wear-resistant member in the form of a plate wherein the tough wear-resistant member comprises a hard composite that provides wear resistance and contains hard constituents held in an infiltrant matrix and a support (e.g., steel) that provide toughness;
FIG. 2 is a schematic view of a hard member that comprises a hard composite and a support wherein the matrix holds the hard constituents to form the hard composite and there is a bond between the hard composite and the support;
FIG. 3 is a schematic view of the components of the hard member of FIG. 2 in a mold prior to the infiltration of the matrix material through the mass of hard constituents wherein the infiltrant matrix material is on top of the mass of hard constituents, and the mass of hard constituents is positioned on a support;
FIG. 4 is an isometric view of a specific embodiment of a hard member that comprises a hard composite and a support wherein a plurality of sintered cemented carbide compacts that comprise a part of the hard composite have at least a portion thereof that projects from the surface of the hard composite;
FIG. 5 is a cross-sectional view of a wear resistant tube wherein the interior layer of the pipe comprises a support and the exterior layer of the pipe comprises a hard composite so that the exterior surface possesses wear-resistant properties;
FIG. 6 is a cross-sectional view of a wear-resistant tube wherein the exterior layer of the tube comprises a support and the interior layer of the tube comprises a hard composite so that the interior layer possesses wear-resistant properties; and
FIG. 7 is an isometric view of a center feed disk for an impeller rock crusher wherein the disk that presents an inner portion that presents a hard composite with a circular wear surface and a cylindrical wear surface and an outer portion that presents a circular or doughnut-like wear surface wherein the support member presents a non-planar interface (or surface) for joinder with the hard composite;
FIG. 7A is a cross-sectional view of the center feed disk of FIG. 7 illustrating the non-planer interface between the hard composite and the support;
FIG. 8 is a cross-sectional view of a tough wear resistant member wherein the interface between the hard composite and the support presents a roughened surface;
FIG. 9 is a cross-sectional view of a tough wear resistant member wherein the support contains holes therein with a portion of the hard composite contained within the holes; and
FIG. 10 is across-sectional view of another embodiment of a center feed disk wherein the hard composite comprises an outer ring of hard carbide particles cast in a matrix and an inner portion that comprises cemented carbide compacts held in a matrix powder and infiltrant alloy, and the hard composite is on a support.

### DETAILED DESCRIPTION OF THE INVENTION

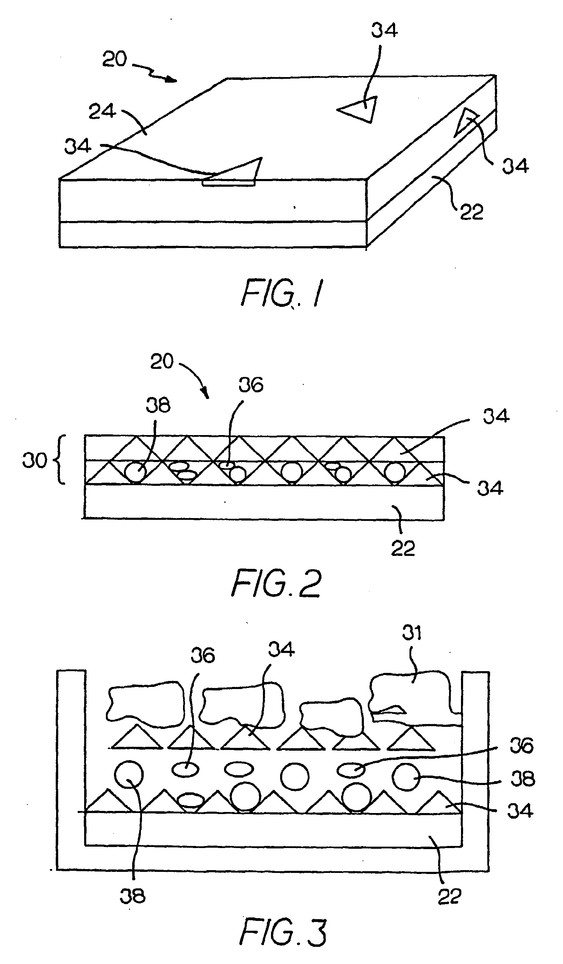

Referring to the drawings, one specific embodiment of the tough wear-resistant hard member generally designated as 20 is shown in FIG. 1. Tough wear-resistant member 20 is in the form of a plate; however, one must appreciate that the tough wear-resistant member can take on any one of a number of different shapes or geometries to accommodate different applications. In this regard, some of the later embodiments illustrated herein present different geometries.

The tough wear-resistant hard member 20 comprises a support 22 and a hard composite 24. The hard composite 24 is affixed to the support 22. The hard composite 24 provides the wear resistant properties and the support 22 provides the toughness properties.

FIG. 2 illustrates the tough wear-resistant member 20 of FIG. 1 in schematic fashion so as to show a cross section of the hard member 20. FIG. 3 is a schematic view that shows the general relative positioning of the components in the mold prior to the formation of the tough wear resistant member 20 of the embodiment of FIG. 1.

The support 22 may be made from any one of many materials that possess properties so as to provide toughness properties (as well as support) for the tough wear-resistant member 20. These materials include (without limitation) ferrous alloys and non-ferrous alloys, as well as other supports that may require a wear-resistant surface. Specific exemplary materials for the support comprise various steels such as, for example, AISI 4140 steel and AISI 316 stainless steel. The nominal composition (in weight percent) for the AISI 4140 steel is: 0.38-0.43% carbon, 0.75-1.00% manganese, 0.035% phosphorous, 0.040% sulfur, 0.15-0.35% silicon, 0.80-1.10% chromium, 0.15-0.25% molybdenum and the balance iron. The nominal composition (in weight percent) for 316 stainless steel is: maximum carbon 0.08%, maximum manganese 2.00%, maximum phosphorous 0.030%, maximum silicon 0.030%, 10.00-16.00% nickel, 16.00-18.00% chromium, 2.00-3.00% molybdenum, and the balance iron. The support could also comprise a casting having hard particles therein. The support could also comprise white cast iron. Although this aspect will be further discussed hereinafter, the support should also possess properties so that it is bondable with the infiltrant alloy whereby there is a secure bond between the support 22 and the hard composite 24.

In the specific embodiments of FIGS. 1 through 3, the hard composite 24 comprises a plurality of discrete hard constituents (described hereinafter) wherein these hard constituents are held within a matrix designated by bracket 30. The matrix comprises a mass of matrix powder that comprises different kinds of hard particles and/or powders, and an infiltrant alloy 31 (Fig. 3) that has been infiltrated into the mass of the matrix powder and the hard constituents under the influence of heat and sometimes under additional environmental influences such as, for example, in a pressure or in a vacuum. Furthermore, the infiltrant alloy may be infiltrated into the mass of hard constituents and matrix powder under various atmospheres (e.g., argon, helium, hydrogen, and nitrogen).

In the specific embodiment of FIGS. 1 through 3, the hard constituents comprise sintered cemented carbide compacts 34 that are shown in schematic in FIGS. 2 and 3 as a triangle-shaped member. In regard to the sintered cemented carbide compact 34, this hard constituent presents a specific predetermined shape. This shape can vary depending upon the specific application for the tough wear-resistant hard member. Powder metallurgical techniques allow for the shape of the compact 34 to take on any one of a number of shapes or geometries. In one alternative, applicant contemplates that the hard constituents (e.g., hard compact 34) are of a size so as to have a surface area that ranges between about 0.001 square inches (0.006 square centimeters) and about 16 square inches (103 square centimeters). Applicant also contemplates that the compact may be of a size that ranges between about 0.005 square inches (0.03 square centimeters) and about 5 square inches (33 centimeters). Applicant further contemplates that the compact may be of a size that ranges between about 0.0005 square inches (0.003 square centimeters) and about 0.5 square inches (0.003 centimeters).

As an alternative, the hard compact 34 could be crushed to obtain hard constituents. In another alternative, applicant contemplates that the hard constituents are crushed particles (or the like) of a larger size wherein the particle size is measured by mesh size (e.g., -80 +120 mesh).

The specific embodiment of FIGS. 1 through 3 shows that each one of the sintered cemented carbide compacts 34 is selectively positioned within the matrix of the hard composite 24. As FIG. 3 shows schematically, one generally accomplishes such orientation by selectively positioning the sintered cemented carbide compacts 34 in the mold prior to infiltration. Applicant contemplates that the compacts 34 may cover between about 0.5 percent to about 90 percent of the surface area of the wear-resistant hard member.

In the specific embodiment of FIGS. 1 through 3 (and as shown in schematic by FIGS. 2 and 3), the location of the sintered cemented carbide compacts 34 is in a region near the surface of the hard composite 24. As shown in schematic in FIGS 2 and 3, sintered cemented carbide compacts 34 are also located in a region near the interface between the hard composite 24 and the support 22 whereby these compacts are on the surface of the support 22. Some of the sintered cemented carbide compacts 34 are also located above the sintered cemented carbide compacts 34 on the support 22. In this particular embodiment, the sintered cemented carbide compacts 34 are flush with the surface of the hard composite 24 so that they do not project therefrom. Applicant does not intend to restrict the invention to the specific positioning of the hard constituents in the hard composite. For example, the hard constituents may be uniformly (or non-uniformly or randomly) distributed throughout the volume of the hard composite.

One composition of the sintered cemented carbide compact 34 is cobalt cemented tungsten carbide wherein the cobalt ranges between about 0.2 weight percent and about 6 weight percent of the cobalt cemented tungsten carbide compact and tungsten carbide is the balance of the composition. Another composition for the sintered cemented carbide compact 34 is cobalt cemented tungsten carbide wherein the cobalt ranges between about 6 weight percent and about 30 weight percent of the cobalt cemented tungsten carbide compact and tungsten carbide is the balance of the composition. In still another composition, the sintered cemented carbide compact may comprise cobalt (10 weight percent cobalt) cemented tungsten carbide.

By mentioning the above specific hard constituent, applicant does not intend the limit the scope of the invention to this specific hard constituent. Applicant contemplates that other materials would be suitable for use as the hard constituents in the hard composite. In this regard, the following materials would appear to be suitable for use as hard constituents in the hard composite: sintered cemented tungsten carbide wherein a binder includes one or more of cobalt, nickel, iron and molybdenum; coated sintered cemented tungsten carbide wherein a binder includes one or more of cobalt, nickel, iron and molybdenum, and the coating comprises one or more of nickel, cobalt, iron and molybdenum; one or more of the carbides, nitrides, and borides of one or more of titanium, niobium, tantalum, hafnium, and zirconium; one or more of the coated carbides, coated nitrides, and coated borides of one or more of titanium, niobium, tantalum, hafnium, and zirconium wherein the coating comprises one or more of nickel, cobalt, iron and molybdenum; chromium carbides; coated chromium carbides; coated silicon carbide wherein the coating comprises one or more of nickel, cobalt, iron and molybdenum; and coated silicon nitride wherein the coating comprises one or more of nickel, cobalt, iron, copper, molybdenum or any other suitable metal; and coated boron carbide wherein the coating comprises one or more of nickel, cobalt, iron, copper, molybdenum, and any other suitable metal.

The matrix powder comprises a crushed cemented carbide particle 36 that is shown in schematic in FIGS. 2 and 3 as an oval-shaped member, and a crushed cast carbide particle 38 that is shown in schematic in FIGS. 2 and 3 as a circular-shaped member.

Referring to the components of the matrix powder, the crushed cemented carbide particles 36 may be present in a size range for these crushed cemented carbide particles equal to -325 + 200 mesh. Another size range for these crushed cemented carbide particles is - 80 + 325 mesh. The standard to determine the particle size is by using sieve size analysis and the Fisher sub-sieve size analyzer for -325 mesh particles. One composition for the crushed cemented carbide particles is cobalt cemented tungsten carbide wherein the cobalt ranges between about 6 weight percent and about 30 weight percent of the cobalt cemented tungsten carbide material and tungsten carbide is the balance of the material. Another preferred composition for crushed cemented carbide particles is cobalt cemented tungsten carbide wherein the cobalt ranges between about 0.2 weight percent and about 6 weight percent of the cobalt cemented tungsten carbide material and tungsten carbide is the balance of the material.

In regard to the crushed cast carbide particles 38, one size range for these particles is -325 mesh. Another size range for these particles is -80 mesh. One composition for these particles is cast tungsten carbide. Applicant contemplates that the crushed cast carbide particles may vary in composition throughout a particular hard composite depending upon the specific application. Applicant further contemplates that other cast carbides or hard materials are suitable for use in place or along with the crushed cast carbide particles 38.

The matrix powder may further include in addition to crushed cemented carbide particles and/or crushed cast carbide particles, any one or more of the following: crushed carbide particles (e.g., crushed tungsten carbide particles that have a size of -80 +325 mesh), steel particles that have an exemplary size of -325 mesh, carbonyl iron particles that have an exemplary size of -325 mesh, cemented carbide powder, and coated (e.g., nickel coating) cemented carbide particles, and nickel-coated tungsten carbide particles (-80 +325 mesh).

As show in FIG. 3, the crushed cemented carbide particles and the cast carbide particles are generally positioned throughout the volume of the mold.

As discussed above, it is desirable that the infiltrant alloy 31 has a melting point that is low enough so as to not degrade the hard constituents upon contact therewith during the infiltration process. Along this line, the infiltrant alloy has a melting point that ranges between about 500 degrees Centigrade and about 1400 degrees Centigrade. Applicant contemplates that the infiltrant alloys may have a melting point that ranges between about 600 degrees Centigrade and about 800 degrees Centigrade. Applicant further contemplates that the infiltrant alloys may have a melting point that ranges between about 690 degrees Centigrade and about 770 degrees Centigrade. Applicant still further contemplates that the infiltrant alloys may have a melting point below about 700 degrees Centigrade. Exemplary general types of infiltrant alloys include copper-based alloys such as, for example, copper-silver alloys, copper-zinc alloys, copper-nickel alloys, coppertin alloys, and nickel-based alloys including nickel-copper-manganese alloys. Exemplary infiltrant alloys are set forth in Table 1 herein below.

**Table 1**

| Compositions of Infiltrant Alloys in Weight Percent | | | | | | | | |
|---|---|---|---|---|---|---|---|---|
| Alloy/ Composition | Cu | Ni | Zn | Mn | Ag | Sn | Solidus (Melting Point)(°C) | Liquidus (Flow Point) °C |
| A-1 | 53 | 15 | 8 | 24 | - | - | 1150 | |
| 202 | 45 | - | 35 | - | 20 | - | 710 | 815 |
| 255 | 40 | - | 33 | - | 25 | 2 | 690 | 780 |
| 559 | 42 | 2 | - | - | 56 | - | 770 | 895 |
| 700 | 20 | - | 10 | - | 70 | - | 690 | 740 |

By mentioning specific infiltrant alloys in Table 1, applicant does not intend to limit the scope of the invention to infiltrant alloys with these specific compositions and/or properties.

Referring to a tough wear-resistant member that presents an overall generally rectangular shape along the lines of FIG. 1, the hard particles in the hard composite may comprise 100 percent crushed nickel cemented chromium carbide particles. The nickel could comprise between about 3 weight percent and about 25 weight percent of the cemented carbide with chromium carbide comprising the balance. The preferred composition of the cemented carbide is about 15 weight percent nickel and the balance chromium carbide. The particle size of the crushed cemented (nickel) chromium carbide particles can range between about -325 mesh and about +80 mesh. The infiltrant alloy can comprise between about 60 weight percent and about 80 weight percent of the hard composite and the crushed nickel cemented chromium carbides can comprise between about 20 weight percent and about 40 weight percent of the hard composite.

The embodiment of FIG. 1 can also be made from the compositions set forth in Table 2A below. The matrix powder is Mixture No. 2 taken from Table 2 hereof. The hard constituents are crushed nickel cemented chromium carbide wherein the nickel is present in an amount of 15 weight percent. The particle size of the crushed cemented (nickel) chromium carbide particles can range between about -325 mesh and about +80 mesh. The titanium diboride (TiB₂) particles have a particle size equal to -325 mesh. The infiltrant alloy was the copper-based alloy A-1 set forth in Table 1. The infiltrant alloy comprised between about 60 weight percent and about 70 weight percent of the hard composite.

**Table 2A**

| Compositions of the Hard Composite | | | |
|---|---|---|---|
| Composition | Matrix Powder Mixture No. 2 from Table 2 hereof (weight percent) | Crushed Nickel Cemented Chromium Carbide (-325+80 mesh) (weight percent) | Titanium Diboride Particles (-325 mesh) (weight percent) |
| 1-A | 40 | 40 | 20 |
| 2-A | 80 | | 20 |
| 3-A | 66 | | 34 |
| 4-A | | 66 | 34 |
| 5-A | | 50 | 50 |

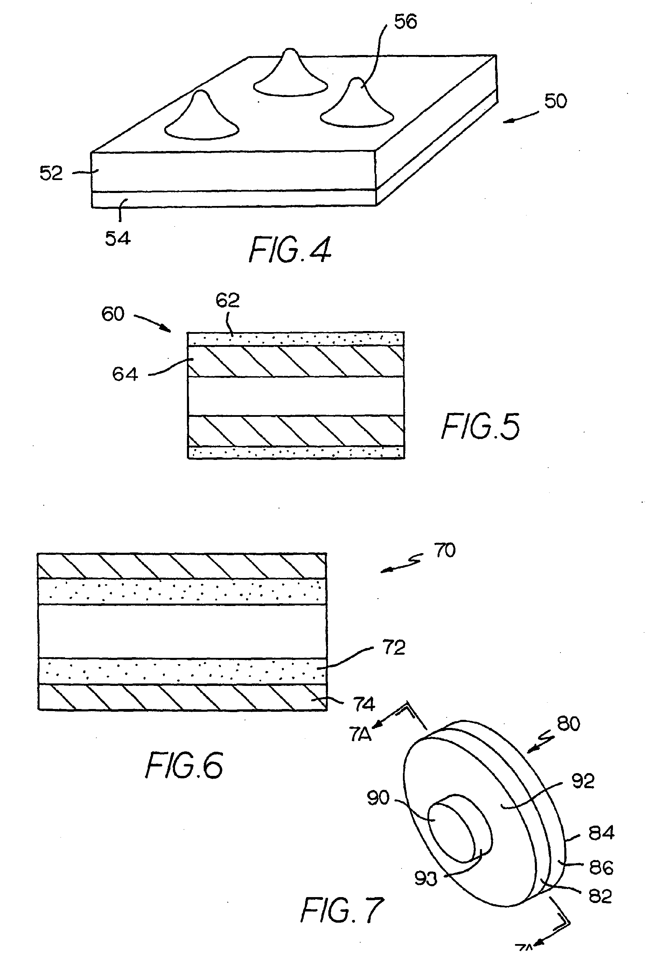

Referring to FIG. 4 there is shown a tough wear-resistant member 50 that has a hard composite 52 affixed to a support 54. The hard composite 52 contains a plurality of sintered cemented carbide compacts 56 that project from one surface thereof. In this embodiment, the support typically is made from 4140 steel. The hard composite body 52 typically comprises sintered cemented carbide compacts 56 that typically have a composition of 10 weight percent cobalt and the balance tungsten carbide. The matrix powder typically includes tungsten carbide, chromium carbide, as well as cobalt and nickel in the form of a binder alloy for the carbides and/or a coating on the carbides. One typical infiltrant alloy has a composition (weight percent) of copper(53%)-nickel(15%)-manganese(24%)-zinc(8%) and a melting point equal to about 1150 degrees Centigrade.

The cemented carbide compacts 56 typically cover between about 40 percent to about 60 percent of the surface area of the hard composite 52. The cemented carbide compacts 56 generally comprise about 90 weight percent of the hard composite 52. In the specific embodiment illustrated the cemented carbide compacts 56 protrude from the surface and take on a drop-like shape. In the case where the cemented carbide compacts take on a square or rectangular shape, the compacts can cover up to between about 80 percent and about 85 percent of the surface area of the hard composite.

Referring to FIG. 5 there is shown a tough wear-resistant member 60 that has a cylindrical hard composite 62 affixed to a cylindrical support 64. In this embodiment, the support 64 typically is made from either 316 stainless steel or 4140 steel. The hard composite body 62 typically comprises hard constituents that comprises one or more sintered carbides wherein these carbides include tungsten, titanium, niobium, tantalum, hafnium, chromium and zirconium. The matrix powder typically comprises one or more sintered carbides, crushed sintered carbides, cast carbide, crushed carbides, tungsten carbide powders and chromium carbide powders. The infiltrant alloy has a composition (weight percent) of copper(53%)-nickel(15%)-manganese(24%)-zinc(8%) and a melting point equal to about 1150 degrees Centigrade.

In one specific example of member 60, the hard composite 62 contains hard constituents that comprise crushed cemented tungsten carbide having a particle size equal to -80+120 mesh. The cemented carbide is cobalt cemented tungsten carbide where the cobalt is present in an amount of 10 weight percent. The hard composite further contains a matrix powder that could be any one of the matrix powders set forth in Table 2 through Table 6 hereof, but preferred a matrix powder may be any one of Matrix Powders Nos. 1 through 3 set forth in Table 2 hereof. The ratio by weight of the matrix powder to the infiltrant alloy is about 40:60 by weight. In some applications, the hard constituent crushed cemented tungsten carbide particles (-80+120 mesh) range between about 2.5 volume percent and about 40 volume percent of the hard composite with the balance comprising matrix powder and infiltrant alloy. However, there are some applications in which the crushed cemented tungsten carbide particles range between about 2 volume percent to about 4 volume percent of the hard composite. There are also other applications in which the crushed cemented tungsten carbide particles range between about 30 volume percent and about 40 volume percent of the hard composite.

Referring to FIG. 6 there is shown a tough wear-resistant member 70 that has a cylindrical hard composite 72 affixed to a cylindrical support 74. In this embodiment, the support typically is made from 4140 steel or 316 stainless steel. The hard composite body 62 typically comprises hard constituents that comprise one or more sintered carbides wherein these carbides include tungsten, titanium, niobium, tantalum, hafnium, chromium and zirconium. The matrix powder typically comprises one or more sintered carbides, crushed sintered carbides, cast carbide, crushed carbides, tungsten carbide powders and chromium carbide powders. The infiltrant alloy has a composition of copper(53%)-nickel(15%)-manganese(24%)-zinc(8%) and a melting point equal to about 1150 degrees Centigrade.

Like for the embodiment of FIG. 5, the hard composite 72 contains hard constituents that comprise crushed cemented tungsten carbide having a particle size equal to -80+120 mesh. The cemented carbide is cobalt cemented tungsten carbide where the cobalt is present in an amount of 10 weight percent. The hard composite further contains a matrix powder that could be any one of the matrix powders set forth in Table 2 through Table 6 hereof, but preferred a matrix powder may be any one of Matrix Powders Nos. 1 through 3 set forth in Table 2 hereof. The ratio by weight of the matrix powder to the infiltrant alloy is about 40:60 by weight. In some applications, the hard constituent crushed cemented tungsten carbide particles (-80+120 mesh) range between about 2.5 volume percent and about 40 volume percent of the hard composite with the balance comprising matrix powder and infiltrant alloy. However, there are some applications in which the crushed cemented tungsten carbide particles range between about 2 volume percent to about 4 volume percent of the hard composite. There are also other applications in which the crushed cemented tungsten carbide particles range between about 30 volume percent and about 40 volume percent of the hard composite.

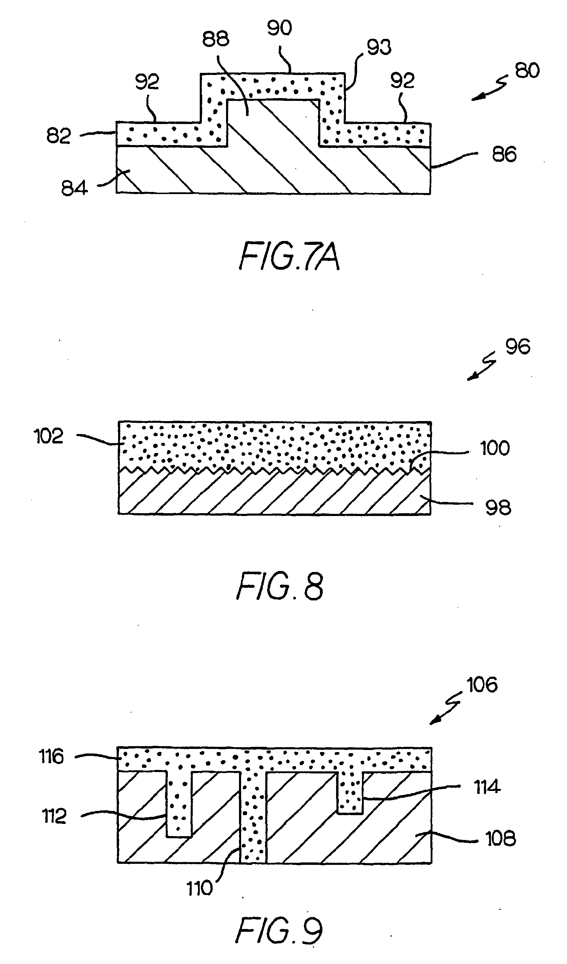

Referring to FIGS. 7 and 7A, there is shown a tough wear-resistant member generally designated as 80 that has a hard composite 82 affixed to a support 84. Member 80 is a center feed disk for an impeller rock crusher. In this embodiment, the support 84 typically is made steel (e.g., 4140 steel) or white iron. The support 84 has a cylindrical base 86 with an inner cylindrical projection 88. As can be seen from the cross-sectional view of FIG. 7A, there is a non-planer interface between the support 84 and the hard composite 82. As also can be seen from FIGS. 7 and 7A, the hard composite 82 presents different wear surfaces 90 and 92 and cylindrical wear surface 93 wherein wear surface 90 is an inner circular surface and wear surface 92 is an outer circular or doughnut-like surface.

The hard composite body 82 typically comprises hard constituents that typically comprise cemented carbides, silicon carbides, boron carbide, aluminum oxide, zirconia and other suitable hard materials. The matrix powder typically comprises one or more of crushed tungsten carbide, crushed cemented tungsten carbide, crushed cast tungsten carbide, iron powder, tungsten carbide powder (the tungsten carbide made by a thermit process or from co-carburized tungsten carbide) and/or chromium carbide powder. The infiltrant alloy has a composition of copper(53%)-nickel(15%)-manganese(24%)-zinc(8%) and a melting point equal to about 1150 degrees Centigrade.

Referring to FIG. 8, there is shown a tough wear-resistant member generally designated as 96. Member 96 has a support 98 that presents a roughened surface 100. Wear-resistant member 96 further includes a hard composite 102. The interface between the hard composite 102 and the support 98 is roughened as shown by FIG. 8.

Referring to FIG. 9, there is shown still another embodiment of a tough wear-resistant member generally designated as 106. Wear-resistant member 106 comprises a support 108 that contains a hole or bore 110 that passes all the way through the thickness of the support 108. Support 108 further contains a closed-end bore 112 of one depth and another closed-end bore of another depth 114. Bore 112 has a greater depth then does bore 114.

Wear-resistant member 106 also includes a hard composite 116. Hard composite 106 extends into the volumes of the bores (110, 112, 114) as is shown in the cross-sectional view of FIG. 9. The interface between the hard composite and the support is generally planar, except for the presence of the openings to the bores.

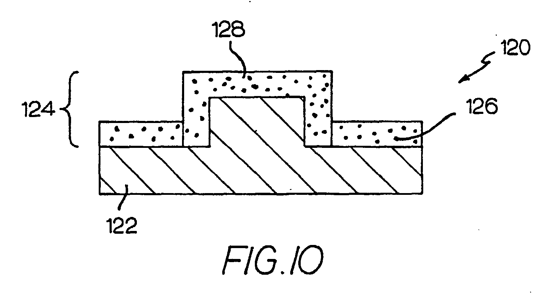

FIG. 10 illustrates another specific embodiment of a center feed disk generally designated as 120. Disk 120 includes a support 122. The support 122 can be made from a number of different materials along the lines of the support 84. The disk 120 further includes a hard composite designated by brackets 124. The hard composite 124 comprises an outer ring 126. Outer ring 126 comprises hard particles cast in a Kencast matrix. The hard composite 124 also includes a center portion 128 that comprises about 90 volume percent cobalt cemented tungsten carbide compacts. The cobalt typically comprises about 10 weight percent of the cemented tungsten carbide compacts. The infiltrant alloy is the same as the infiltrant alloy used in the embodiment of FIGS. 7 and 7A.

Examples of specific matrix powders (Mixtures Nos. 1 through 20) are set forth in Tables 2 through 6 hereinafter.

**Table 2**

| Components of the Matrix Powder Mixtures Nos. 1 through 4 (Weight Percent) | | | | |
|---|---|---|---|---|
| Constituent (particle size) | Mixture No. 1 | Mixture No. 2 | Mixture No. 3 | Mixture No. 4 |
| Crushed tungsten carbide (-80+325 mesh) | 67 wt.% | 67 wt.% | 0 wt% | 0 wt.% |
| Crushed tungsten carbide (-325 mesh) | 0 wt.% | 15.5 wt.% | 0 wt.% | 0 wt% |
| Crushed cast tungsten carbide (-325 mesh) | 31 wt.% | 15.5 wt.% | 0 wt.% | 0 wt.% |
| 4600 steel (-325 mesh) | 1 wt.% | 0 wt.% | 0 wt.% | 0 wt.% |
| Carbonyl iron (- 325 mesh) | 1 wt.% | 0 wt.% | 0 wt.% | 0 wt.% |
| Nickel (-325 mesh) | 0 wt.% | 2 wt.% | 0 wt.% | 0 wt.% |
| Crushed cobalt (10 wt. Percent) cemented tungsten carbide (-140 +325 mesh) | 0 wt.% | 0 wt.% | 100 wt.% | |
| Crushed nickel (10 wt. Percent) cemented tungsten carbide (-140 +325 mesh) | 0 wt.% | 0 wt.% | | 100 wt.% |

**Table 3**

| Components of the Matrix Powder Mixtures Nos. 5 through 8 (Weight Percent) | | | | |
|---|---|---|---|---|
| Constituent (particle size) | Mixture No. 5 | Mixture No. 6 | Mixture No. 7 | Mixture No. 8 |
| Crushed tungsten carbide (-80+325 mesh) | 63.65 wt.% | 63.65 wt.% | 0 wt.% | 0 wt.% |
| Crushed tungsten carbide (-325 mesh) | 0 wt.% | 14.725 wt.% | 0 wt.% | 0 wt.% |
| Crushed cast tungsten carbide (-325 mesh) | 29.45 wt.% | 14.725 wt.% | 0 wt% | 0 wt.% |
| 4600 steel (-325 mesh) | .95 wt.% | 0 wt.% | 0 wt.% | 0 wt.% |
| Carbonyl iron (-325 mesh) | .95 wt.% | 0 wt.% | 0 wt.% | 0 wt.% |
| Nickel (-325 mesh) | 0 wt.% | 1.9 wt.% | 0 wt.% | 0 wt.% |
| Crushed cobalt (10 wt. Percent) cemented tungsten carbide (-140 +325 mesh) | 0 wt.% | 0 wt.% | 95 wt.% | |
| Crushed nickel (10 wt. Percent) cemented tungsten carbide (-140 +325 mesh) | 0 wt.% | 0 wt.% | | 95 wt.% |
| Chromium carbide (-45 mesh) | 5 wt% | 5 wt.% | 5 wt.% | 5 wt.% |

**Table 4**

| Components of the Matrix Powder Mixtures Nos. 9 through 12 (Weight Percent) | | | | |
|---|---|---|---|---|
| Constituent (particle size) | Mixture No. 9 | Mixture No. 10 | Mixture No. 11 | Mixture No. 12 |
| Crushed tungsten carbide (-80+325 mesh) | 53.6 wt.% | 53.6 wt.% | 0 wt.% | 0 wt.% |
| Crushed tungsten carbide (-325 mesh) | 0 wt.% | 12.4 wt.% | 0 wt% | 0 wt.% |
| Crushed cast tungsten carbide (-325 mesh) | 24.8 wt.% | 12.4 wt.% | 0 wt.% | 0 wt.% |
| 4600 steel (-325 mesh) | .8 wt.% | 0 wt.% | 0 wt.% | 0 wt.% |
| Carbonyl iron (-325 mesh) | .8 wt.% | 0 wt.% | 0 wt.% | 0 wt.% |
| Nickel (-325 mesh) | 0 wt.% | 1.6 wt.% | 0 wt.% | 0 wt.% |
| Crushed cobalt (10 wt. Percent) cemented tungsten carbide (-140 +325 | 0 wt.% | 0 wt.% | 80 wt.% | |
| mesh) Crushed nickel (10 wt. Percent) cemented tungsten carbide (-140 +325 mesh) | 0 wt.% | 0 wt.% | 0 wt.% | 80 wt.% |
| Nickel Coated Tungsten Carbide Powder (-325 mesh) | 20 wt.% | 20 wt.% | 20 wt.% | 20 wt.% |

**Table 5**

| Components of Matrix Powder Mixtures 13 through 16 (Weight Percent) | | | | |
|---|---|---|---|---|
| Constituent (particle size) | Mixture No. 13 | Mixture No. 14 | Mixture No. 15 | Mixture No. 16 |
| Crushed tungsten carbide (-80+325 mesh) | 60.3 wt.% | 60.3 wt.% | 0 wt% | 0 wt.% |
| Crushed tungsten carbide (-325 mesh) | 0 wt.% | 13.95 wt% | 0 wt.% | 0 wt.% |
| Crushed cast tungsten carbide (-325 mesh) | 27.9 wt.% | 13.95 wt% | 0 wt.% | 0 wt.% |
| 4600 steel (-325 mesh) | .9 wt.% | 0 wt.% | 0 wt.% | 0 wt.% |
| Carbonyl iron (-325 mesh) | .9 wt.% | 0 wt.% | 0 wt% | 0 wt% |
| Nickel (-325 mesh) | 0 wt% | 1.8 wt% | 0 wt% | 0 wt% |
| Crushed cobalt (10 wt. Percent) cemented tungsten carbide (-140 +325 mesh) | 0 wt.% | 0 wt.% | 90 wt.% | |
| Crushed nickel (10 wt. Percent) cemented tungsten carbide (-140 +325 mesh) | 0 wt.% | 0 wt.% | 0 wt.% | 90 wt.% |
| Crushed nickel (15 wt %) cemented chromium carbide (Ni-Cr₃C₂) (-140 +325 mesh) | 10 wt.% | 10 wt% | 10 wt.% | 10 wt.% |

**Table 6**

| Components of Matrix Powder Mixtures 17 through 20 (in Weight Percent) | | | | |
|---|---|---|---|---|
| Constituent (particle size) | Mixture No. 17 | Mixture No. 18 | Mixture No. 19 | Mixture No. 20 |
| Crushed tungsten carbide (-80+325 mesh) | 56.95 wt.% | 56.95 wt.% | 0 wt.% | 0 wt% |
| Crushed tungsten carbide (-325 mesh) | 0 wt.% | 13.175 wt.% | 0 wt.% | 0 wt.% |
| Crushed cast tungsten carbide (-325 mesh) | 26.35 wt.% | 13.175 wt.% | 0 wt.% | 0 wt.% |
| 4600 steel (-325 mesh) | .85 wt.% | 0 wt.% | 0 wt.% | 0 wt.% |
| Carbonyl iron (-325 mesh) | .85 wt.% | 0 wt.% | 0 wt.% | 0 wt.% |
| Nickel (-325 mesh) | 0 wt.% | 1.7 wt.% | 0 wt.% | 0 wt.% |
| Crushed cobalt (10 wt. Percent) cemented tungsten carbide (-140 +325 mesh) | 0 wt.% | 0 wt.% | 85 wt.% | |
| Crushed nickel (10 wt. Percent) cemented tungsten carbide (-140 +325 mesh) | 0 wt.% | 0 wt.% | | 85 wt.% |
| Nickel-coated tungsten carbide (-325 mesh) | 15 wt.% | 15 wt.% | 15 wt.% | 15 wt.% |

In regard to some specific examples, a tough wear-resistant member was made wherein there was a support and a hard composite. The hard composite comprised hard constituents that comprised sintered cobalt (10 weight percent cobalt) cemented tungsten carbide compacts and the matrix powder comprised Mixture No. 1 in Table 1 and the infiltrant alloy comprised (in weight percent) a Cu(53%)Ni(15%)-Zn(8%)-Mn(24%) alloy described above. The matrix powder comprised 40 weight percent and the infiltrant alloy comprised 60 weight percent of the combination of the matrix powder and the infiltrant alloy. Depending upon the specific application, the cemented tungsten carbide compacts were present in a specified amount between about 1 weight percent and about 95 weight percent with the balance of the hard composite comprising the matrix powder and the infiltrant alloy. In the alternative and depending upon the specific application, the cemented tungsten carbide compacts were present in a specified amount between about 1 weight percent and about 90 percent of the surface area of the hard composite. For some applications, the cemented tungsten carbide compacts may be present in a range between about 1 percent to about 5 percent of the surface area. For other applications, the cemented tungsten carbide compacts may be present in a range between about 70 percent and about 90 percent of the surface area.

Another tough wear-resistant member was made wherein there was a support and a hard composite. The hard composite comprised hard constituents. The hard constituent comprised a sintered cobalt (6 weight percent cobalt) cemented tungsten carbide compact. The matrix powder comprised Mixture No. 2. The infiltrant alloy comprised in weight percent) a Cu(53%)-Ni(15%)-Zn(8%)-Mn(24%). The matrix powder comprised 45 weight percent and the infiltrant alloy comprised 55 weight percent of the combination of the matrix powder and the infiltrant alloy. Depending upon the specific application, the cemented tungsten carbide compacts were present in a specified amount between about 1 weight percent and about 95 weight percent with the balance of the hard composite comprising the matrix powder and the infiltrant alloy. In the alternative and depending upon the specific application, the cemented tungsten carbide compacts were present in a specified amount between about 1 weight percent and about 90 percent of the surface area of the hard composite. For some applications, the cemented tungsten carbide compacts may be present in a range between about 1 percent to about 5 percent of the surface area. For other applications, the cemented tungsten carbide compacts may be present in a range between about 70 percent and about 90 percent of the surface area.

Still another tough wear-resistant member was made wherein there was a support and a hard composite. The hard composite comprised hard constituents wherein the hard constituent comprised sintered cobalt (6 weight percent cobalt) cemented tungsten carbide cylindrical compacts. The matrix powder was Mixture No. 3 as set forth in Table 1. The infiltrant alloy comprised (in weight percent) a Cu(53%)-Ni(15%)-Zn(8%)-Mn(24%). The matrix powder comprised 40 weight percent and the infiltrant alloy comprised 60 weight percent of the combination of the matrix powder and the infiltrant alloy. Depending upon the specific application, the cemented tungsten carbide compacts were present in a specified amount between about 1 weight percent and about 95 weight percent with the balance of the hard composite comprising the matrix powder and the infiltrant alloy. In the alternative and depending upon the specific application, the cemented tungsten carbide compacts were present in a specified amount between about 1 weight percent and about 90 percent of the surface area of the hard composite. For some applications, the cemented tungsten carbide compacts may be present in a range between about 1 percent to about 5 percent of the surface area. For other applications, the cemented tungsten carbide compacts may be present in a range between about 70 percent and about 90 percent of the surface area.

Another tough wear-resistant member was made wherein there was a support and a hard composite. The hard composite comprised hard constituents comprised of nickel-coated sintered cobalt (10 weight percent cobalt) cemented tungsten carbide compacts. The matrix powder comprised Mixture No. 4 from Table 1. The infiltrant alloy comprised (in weight percent) a Cu(53%)-Ni(15%)-Zn(8%)-Mn(24%). The matrix powder comprised 45 weight percent and the infiltrant alloy comprised 55 weight percent of the combination of the matrix powder and the infiltrant alloy. Depending upon the specific application, the cemented tungsten carbide compacts were present in a specified amount between about 1 weight percent and about 95 weight percent with the balance of the hard composite comprising the matrix powder and the infiltrant alloy. In the alternative and depending upon the specific application, the cemented tungsten carbide compacts were present in a specified amount between about 1 weight percent and about 90 percent of the surface area of the hard composite. For some applications, the cemented tungsten carbide compacts may be present in a range between about 1 percent to about 5 percent of the surface area. For other applications, the cemented tungsten carbide compacts may be present in a range between about 70 percent and about 90 percent of the surface area.

It should also be appreciated that the tough wear-resistant body of the present invention may be used in high temperature applications such as, for example, a fluid liner used in the chemical industry wherein such a liner may comprise a fluid catalytic cracking liner used in the oil refinery business. The operating temperature ranges between about room temperature and 871°C(1600 degrees Fahrenheit).

## Claims

1. A tough wear-resistant hard member consisting of:
a hard composite member;
a support having a surface area adjacent to the hard composite member;
the hard composite member affixed to the support over at least a portion of the adjacent surface area of the support;
the hard composite member consisting of a plurality of discrete hard constituents distributed in the hard composite member, each one of the discrete hard constituents is of a size so as to have a surface area between 0.006 cm² and 103 cm² (0. 001 square inches and 16 square inches);
the hard composite member further consisting of a matrix powder comprising hard particles wherein substantially all of the hard particles have a size smaller than the size of the hard constituents;
the hard composite member further consisting of an infiltrant alloy having a melting point between 500 °C and 1400 °C and the infiltrant alloy being infiltrated under heat into a mixture of the discrete hard constituents and the matrix powder, whereby the hard constituents and the matrix powder and the infiltrant alloy are bonded together to form the hard composite member;
and the support being made of a material that is bondable with the infiltrant alloy whereby the infiltrant alloy forms a joint at the joinder of the support and the hard composite member;
wherein the discrete hard constituents consist of one or more of: sintered cemented tungsten carbide wherein a binder includes one or more of cobalt, nickel, iron and molybdenum; coated sintered cemented tungsten carbide wherein a binder includes one or more of cobalt, nickel, iron and molybdenum, and the coating comprises one or more of nickel, cobalt, iron and molybdenum; one or more of the carbides, nitrides, and borides of one or more of titanium, niobium, tantalum, hafnium, and zirconium, tungsten carbide; one or more of the coated carbides, coated nitrides, and coated borides of one or more of titanium, niobium, tantalum, hafnium, and zirconium wherein the coating comprises one or more of nickel, cobalt, iron and molybdenum; chromium carbides; coated chromium carbides; coated tungsten carbide wherein the coating comprises one or more of nickel, cobalt, iron and molybdenum; coated silicon carbide wherein the coating comprises one or more of nickel, cobalt, iron and molybdenum, and coated silicon nitride wherein the coating comprises one or more of nickel, cobalt, iron and molybdenum; coated boron carbide, and
wherein the matrix powder consists of between 50 weight percent and 70 weight percent crushed tungsten carbide having a particle size of -80 +325 mesh, between 24 weight percent and 32 weight percent crushed cast tungsten carbide having a particle size of -325 mesh, between 0.8 weight percent and 1.2 weight percent steel particles having a particle size of -325 mesh, between 0.8 and 1.2 weight percent carbonyl iron particles having a particle size of -325 mesh, between 0 weight percent and 7 weight percent chromium carbide particles having a particle size of -45 mesh, between 0 weight percent and 25 weight percent nickel-coated tungsten carbide particles having a particle size of -325 mesh, and between 0 weight percent and 15 weight percent crushed cemented chromium carbide-nickel particles having a particle size of -140 +325 mesh.

2. The tough wear-resistant member of claim 1, wherein the matrix powder comprises between 65 weight percent and 69 weight percent crushed tungsten carbide particles having a particle size of -325 mesh, between 29 weight percent and 33 weight percent crushed cast tungsten carbide particles having a particle size of -325 mesh, between 0.9 weight percent and 1.1 weight percent steel particles having a particle size of -325 mesh, and between 0.9 weight percent and 1.1 weight percent carbonyl iron particles having a particle size of -325 mesh.

3. The tough wear-resistant member of claim 1, wherein the matrix powder comprises between 61 weight percent and 66 weight percent crushed tungsten carbide particles having a particle size of -325 mesh, between 27 weight percent and 31 weight percent crushed cast tungsten carbide particles having a particle size of -325 mesh, between 0.8 weight percent and 1.0 weight percent steel particles having a particle size of -325 mesh, between 0.8 weight percent and 1.0 weight percent carbonyl iron particles having a particle size of -325 mesh.

4. The tough wear-resistant member of claim 1, wherein the matrix powder comprises between 51 weight percent and 56 weight percent crushed tungsten carbide particles having a particle size of -325 mesh, between 22 weight percent and 37 weight percent crushed cast tungsten carbide particles having a particle size of -325 mesh, between 0.7 weight percent and 0.9 weight percent steel particles having a particle size of -325 mesh, between 0.7 weight percent and 0.9 weight percent carbonyl iron particles having a particle size of -325 mesh, and between 15 weight percent and 25 weight percent nickel-coated tungsten carbide particles having a particle size of -325 mesh.

5. The tough wear-resistant member of claim 1, wherein the matrix powder comprises between 58 weight percent and 63 weight percent crushed tungsten carbide particles having a particle size of -325 mesh, between 25 weight percent and 29 weight percent crushed cast tungsten carbide particles having a particle size of -325 mesh, between 0.8 weight percent and 1.0 weight percent steel particles having a particle size of -325 mesh, between 0.8 weight percent and 1.0 weight percent carbonyl iron particles having a particle size of -325 mesh, and between 8 weight percent and 12 weight percent crushed cemented chromium carbide-nickel particles of a particle size -140 +325 mesh.

6. The tough wear-resistant member of claim 1, wherein the matrix powder comprises between 65 weight percent and 69 weight percent crushed tungsten carbide particles having a particle size of -325 mesh, between 29 weight percent and 33 weight percent crushed cast tungsten carbide particles having a particle size of -325 mesh, between 0.9 weight percent and 1.1 weight percent steel particles having a particle size of -325 mesh, and between 0.9 weight percent and 1.1 weight percent carbonyl iron particles having a particle size of -325 mesh and between 4 weight percent and 6 weight percent chromium carbide particles having a particle size of -45 mesh.

## Patentansprüche

1. Hochbelastbares, verschleißfestes hartes Element, bestehend aus:
einem harten Verbundelement;
einem Träger mit einer an das harte Verbundelement angrenzenden Oberfläche;
wobei das harte Verbundelement an den Träger über zumindest einen Teil der angrenzenden Oberfläche des Trägers angeheftet ist;
das harte Verbundelement aus einer Vielzahl von einzelnen harten Bestandteilen besteht, die in dem harten Verbundelement verteilt sind, wobei jedes der einzelnen harten Bestandteile von einer solchen Größe ist, so dass es eine Oberfläche zwischen 0,006 cm² und 103 cm² (0,001 Quadratzoll und 16 Quadratzoll) besitzt;
das harte Verbundelement weiter aus einem Matrixpulver besteht, umfassend harte Partikel, wobei im Wesentlichen sämtliche der harten Partikel eine kleinere Größe als die harten Bestandteile besitzen;
das harte Verbundelement weiter aus einer Infiltrationslegierung mit einem Schmelzpunkt zwischen 500°C und 1400°C besteht und die Infiltrationslegierung unter Erwärmung zu einer Mischung der einzelnen harten Bestandteile und des Matrixpulvers infiltriert wird, wodurch die harten Bestandteile und das Matrixpulver und die Infiltrationslegierung miteinander verbunden werden unter Bildung des harten Verbundelements;
und der Träger aus einem Material besteht, das mit der Infiltrationslegierung bindungsfähig ist, wodurch die Infiltrationslegierung eine Verbindung an der Verbindungsstelle des Trägers und des harten Verbundelements bildet;
wobei die einzelnen harten Bestandteile aus einem oder mehreren aus den Folgenden bestehen: gesintertem zusammengekittetem Wolframcarbid bzw. Wolframcarbid-Kobaltverbund, wobei ein Bindemittel eines oder mehrere aus Kobalt, Nickel, Eisen und Molybdän einschließt; beschichtetem gesinterten zusammengekitteten Wolframcarbid, wobei ein Bindemittel eines oder mehrere aus Kobalt, Nickel, Eisen und Molybdän einschließt und die Beschichtung eines oder mehrere aus Nickel, Kobalt, Eisen und Molybdän umfasst; einem oder mehreren aus den Carbiden, Nitriden und Boriden von einem oder mehreren von Titan, Niob, Tantal, Hafnium und Zirkonium, Wolframcarbid; einem oder mehreren der beschichteten Carbide, beschichteten Nitride und beschichteten Boride von einem oder mehreren von Titan, Niob, Tantal, Hafnium und Zirkonium, wobei die Beschichtung eines oder mehrere aus Nickel, Kobalt, Eisen und Molybdän umfasst; Chromcarbiden; beschichteten Chromcarbiden; beschichtetem Wolframcarbid, wobei die Beschichtung eines oder mehrere aus Nickel, Kobalt, Eisen und Molybdän umfasst; beschichtetem Siliciumcarbid, wobei die Beschichtung eines oder mehrere aus Nickel, Kobalt, Eisen und Molybdän umfasst, und beschichtetem Siliciumnitrid, wobei die Beschichtung eines oder mehrere aus Nickel, Kobalt, Eisen und Molybdän umfasst; beschichtetem Borcarbid; und
wobei das Matrixpulver aus zwischen 50 Gewichtsprozent und 70 Gewichtsprozent grob zerkleinertem Wolframcarbid mit einer Partikelgröße von -80 +325 Mesh, zwischen 24 Gewichtsprozent und 32 Gewichtsprozent grob zerkleinertem Wolframcarbid mit einer Partikelgröße von -325 Mesh, zwischen 0,8 Gewichtsprozent und 1,2 Gewichtsprozent Stahlpartikeln mit einer Partikelgröße von -325 Mesh, zwischen 0,8 und 1,2 Gewichtsprozent Carbonyleisenpartikeln mit einer Partikelgröße von -325 Mesh, zwischen 0 Gewichtsprozent und 7 Gewichtsprozent Chromcarbidpartikeln mit einer Partikelgröße von -45 Mesh, zwischen 0 Gewichtsprozent und 25 Gewichtsprozent Nickel-beschichteten Wolframcarbidpartikeln mit einer Partikelgröße von -325 Mesh und zwischen 0 Gewichtsprozent und 15 Gewichtsprozent grob zerkleinerten zusammengekitteten Chromcarbid-Nickel-Partikeln mit einer Partikelgröße von -140 + 325 Mesh besteht.

2. Hochbelastbares, verschleißfestes Element gemäß Anspruch 1, wobei das Matrixpulver zwischen 65 Gewichtsprozent und 69 Gewichtsprozent grob zerkleinerte Wolframcarbidpartikel mit einer Partikelgröße von -325 Mesh, zwischen 29 Gewichtsprozent und 33 Gewichtsprozent grob zerkleinerte gegossene Wolframcarbidpartikel mit einer Partikelgröße von -325 Mesh, zwischen 0,9 Gewichtsprozent und 1,1 Gewichtsprozent Stahlpartikel mit einer Partikelgröße von -325 Mesh und zwischen 0,9 Gewichtsprozent und 1,1 Gewichtsprozent Carbonyleisenpartikel mit einer Partikelgröße von -325 Mesh umfasst.

3. Hochbelastbares, verschleißfestes Element gemäß Anspruch 1, wobei das Matrixpulver zwischen 61 Gewichtsprozent und 66 Gewichtsprozent grob zerkleinerte Wolframcarbidpartikel mit einer Partikelgröße von -325 Mesh, zwischen 27 Gewichtsprozent und 31 Gewichtsprozent grob zerkleinerte gegossene Wolframcarbidpartikel mit einer Partikelgröße von -325 Mesh, zwischen 0,8 Gewichtsprozent und 1,0 Gewichtsprozent Stahlpartikel mit einer Partikelgröße von -325 Mesh und zwischen 0,8 Gewichtsprozent und 1,0 Gewichtsprozent Carbonyleisenpartikel mit einer Partikelgröße von -325 Mesh umfasst.

4. Hochbelastbares, verschleißfestes Element gemäß Anspruch 1, wobei das Matrixpulver zwischen 51 Gewichtsprozent und 56 Gewichtsprozent grob zerkleinerte Wolframcarbidpartikel mit einer Partikelgröße von -325 Mesh, zwischen 22 Gewichtsprozent und 37 Gewichtsprozent grob zerkleinerte gegossene Wolframcarbidpartikel mit einer Partikelgröße von -325 Mesh, zwischen 0,7 Gewichtsprozent und 0,9 Gewichtsprozent Stahlpartikel mit einer Partikelgröße von -325 Mesh, zwischen 0,7 Gewichtsprozent und 0,9 Gewichtsprozent Carbonyleisenpartikel mit einer Partikelgröße von -325 Mesh und zwischen 15 Gewichtsprozent und 25 Gewichtsprozent mit Nickel beschichtete Wolframcarbidpartikel mit einer Partikelgröße von -325 Mesh umfasst.

5. Hochbelastbares, verschleißfestes Element gemäß Anspruch 1, wobei das Matrixpulver zwischen 58 Gewichtsprozent und 63 Gewichtsprozent grob zerkleinerte Wolframcarbidpartikel mit einer Partikelgröße von -325 Mesh, zwischen 25 Gewichtsprozent und 29 Gewichtsprozent grob zerkleinerte gegossene Wolframcarbidpartikel mit einer Partikelgröße von -325 Mesh, zwischen 0,8 Gewichtsprozent und 1,0 Gewichtsprozent Stahlpartikel mit einer Partikelgröße von -325 Mesh, zwischen 0,8 Gewichtsprozent und 1,0 Gewichtsprozent Carbonyleisenpartikel mit einer Partikelgröße von -325 Mesh und zwischen 8 Gewichtsprozent und 12 Gewichtsprozent grob zerkleinerte, zusammengekittete Chromcarbid-Nickel-Partikel mit einer Partikelgröße von -140 +325 Mesh umfasst.

6. Hochbelastbares, verschleißfestes Element gemäß Anspruch 1, wobei das Matrixpulver zwischen 65 Gewichtsprozent und 69 Gewichtsprozent grob zerkleinerte Wolframcarbidpartikel mit einer Partikelgröße von -325 Mesh, zwischen 29 Gewichtsprozent und 33 Gewichtsprozent grob zerkleinerte gegossene Wolframcarbidpartikel mit einer Partikelgröße von -325 Mesh, zwischen 0,9 Gewichtsprozent und 1,1 Gewichtsprozent Stahlpartikel mit einer Partikelgröße von -325 Mesh und zwischen 0,9 Gewichtsprozent und 1,1 Gewichtsprozent Carbonyleisenpartikel mit einer Partikelgröße von -325 Mesh und zwischen 4 Gewichtsprozent und 6 Gewichtsprozent Chromcarbidpartikel mit einer Partikelgröße von -45 Mesh umfasst.

## Revendications

1. Élément dur et résilient résistant à l'usure se composant :
d'un élément composite dur ; et
d'un support ayant une surface adjacente à l'élément composite dur,
l'élément composite dur étant fixé au support sur au moins une partie de la surface adjacente du support ;
l'élément composite dur se composant d'une pluralité de constituants durs discrets distribués dans l'élément composite dur, chacun des constituants durs discrets étant d'une taille pour avoir une surface entre 0,006 cm² et 103 cm² (0,001 pouce carré et 16 pouces carrés) ;
l'élément composite dur se composant en outre d'une poudre matricielle comprenant des particules dures, sensiblement toutes les particules dures ayant une taille inférieure à la taille des constituants durs ;
l'élément composite dur se composant en outre d'un alliage d'infiltration ayant un point de fusion entre 500 °C et 1400 °C, l'alliage d'infiltration étant infiltré sous chaleur dans un mélange des constituants durs discrets et de la poudre matricielle, d'où il résulte que les constituants durs et la poudre matricielle et l'alliage d'infiltration sont liés ensemble pour former l'élément composite dur ;
et le support étant constitué d'un matériau qui peut se lier avec l'alliage d'infiltration, d'où il résulte que l'alliage d'infiltration forme un joint à la jonction du support et de l'élément composite dur ;
dans lequel les constituants durs discrets se composent de l'un ou plusieurs des éléments suivants : carbure de tungstène fritté cémenté dans lequel le liant comprend du cobalt et/ou du nickel et/ou du fer et/ou du molybdène ; carbure de tungstène fritté cémenté revêtu dans lequel le liant comprend du cobalt et/ou du nickel et/ou du fer et/ou du molybdène et le revêtement comprend du nickel et/ou du cobalt et/ou du fer et/ou du molybdène ; carbures et/ou nitrures et/ou borures de titane et/ou niobium et/ou tantale et/ou hafnium et/ou zirconium ; carbure de tungstène ; carbures revêtus et/ou nitrures revêtus et/ou borures revêtus de titane et/ou niobium et/ou tantale et/ou hafnium et/ou zirconium dans lesquels le revêtement comprend du nickel et/ou du cobalt et/ou du fer et/ou du molybdène ; carbures de chrome ; carbures de chrome revêtus ; carbure de tungstène revêtu dans lequel le revêtement comprend du nickel et/ou du cobalt et/ou du fer et/ou du molybdène ; carbure de silicium revêtu dans lequel le revêtement comprend du nickel et/ou du cobalt et/ou du fer et/ou du molybdène ; nitrure de silicium revêtu dans lequel le revêtement comprend du nickel et/ou du cobalt et/ou du fer et/ou du molybdène ; et carbure de bore revêtu ; et
dans lequel la poudre matricielle est composée entre 50 pour cent en poids et 70 pour cent en poids de carbure de tungstène broyé ayant une taille de particules de -80 +325 mesh, entre 24 pour cent en poids et 32 pour cent en poids de carbure de tungstène coulé broyé ayant une taille de particules de -325 mesh, entre 0,8 pour cent en poids et 1,2 pour cent en poids de particules d'acier ayant une taille de particules de -325 mesh, entre 0,8 pour cent en poids et 1,2 pour cent en poids de particules de fer carbonyle ayant une taille de particules de -325 mesh, entre 0 pour cent en poids et 7 pour cent en poids de particules de carbure de chrome ayant une taille de particules de -45 mesh, entre 0 pour cent en poids et 25 pour cent en poids de particules de carbure de tungstène revêtu de nickel ayant une taille de particules de -325 mesh, et entre 0 pour cent en poids et 15 pour cent en poids de particules de carbure de chrome-nickel cémenté broyé ayant une taille de particules de -140 +325 mesh.

2. Élément résilient résistant à l'usure selon la revendication 1, dans lequel la poudre matricielle comprend entre 65 pour cent en poids et 69 pour cent en poids de particules de carbure de tungstène broyé ayant une taille de particules de -325 mesh, entre 29 pour cent en poids et 33 pour cent en poids de particules de carbure de tungstène coulé broyé ayant une taille de particules de -325 mesh, entre 0,9 pour cent en poids et 1,1 pour cent en poids de particules d'acier ayant une taille de particules de -325 mesh, et entre 0,9 pour cent en poids et 1,1 pour cent en poids de particules de fer carbonyle ayant une taille de particules de - 325 mesh.

3. Élément résilient résistant à l'usure selon la revendication 1, dans lequel la poudre matricielle comprend entre 61 pour cent en poids et 66 pour cent en poids de particules de carbure de tungstène broyé ayant une taille de particules de -325 mesh, entre 27 pour cent en poids et 31 pour cent en poids de particules de carbure de tungstène coulé broyé ayant une taille de particules de -325 mesh, entre 0,8 pour cent en poids et 1,0 pour cent en poids de particules d'acier ayant une taille de particules de -325 mesh, et entre 0,8 pour cent en poids et 1,0 pour cent en poids de particules de fer carbonyle ayant une taille de particules de - 325 mesh.

4. Élément résilient résistant à l'usure selon la revendication 1, dans lequel la poudre matricielle comprend entre 51 pour cent en poids et 56 pour cent en poids de particules de carbure de tungstène broyé ayant une taille de particules de -325 mesh, entre 22 pour cent en poids et 37 pour cent en poids de particules de carbure de tungstène coulé broyé ayant une taille de particules de -325 mesh, entre 0,7 pour cent en poids et 0,9 pour cent en poids de particules d'acier ayant une taille de particules de -325 mesh, entre 0,7 pour cent en poids et 0,9 pour cent en poids de particules de fer carbonyle ayant une taille de particules de -325 mesh, et entre 15 pour cent en poids et 25 pour cent en poids de particules de carbure de tungstène revêtu de nickel ayant une taille de particules de -325 mesh.

5. Élément résilient résistant à l'usure selon la revendication 1, dans lequel la poudre matricielle comprend entre 58 pour cent en poids et 63 pour cent en poids de particules de carbure de tungstène broyé ayant une taille de particules de -325 mesh, entre 25 pour cent en poids et 29 pour cent en poids de particules de carbure de tungstène coulé broyé ayant une taille de particules de -325 mesh, entre 0,8 pour cent en poids et 1,0 pour cent en poids de particules d'acier ayant une taille de particules de -325 mesh, entre 0,8 pour cent en poids et 1,0 pour cent en poids de particules de fer carbonyle ayant une taille de particules de -325 mesh, et entre 8 pour cent en poids et 12 pour cent en poids de particules de carbure de chrome-nickel cémenté broyé d'une taille de particules de -140 +325 mesh.

6. Élément résilient résistant à l'usure selon la revendication 1, dans lequel la poudre matricielle comprend entre 65 pour cent en poids et 69 pour cent en poids de particules de carbure de tungstène broyé ayant une taille de particules de -325 mesh, entre 29 pour cent en poids et 33 pour cent en poids de particules de carbure de tungstène coulé broyé ayant une taille de particules de -325 mesh, entre 0,9 pour cent en poids et 1,1 pour cent en poids de particules d'acier ayant une taille de particules de -325 mesh, entre 0,9 pour cent en poids et 1,1 pour cent en poids de particules de fer carbonyle ayant une taille de particules de -325 mesh, et entre 4 pour cent en poids et 6 pour cent en poids de particules de carbure de chrome ayant une taille de particules de -45 mesh.
